# EUROPÄISCHE PATENTSCHRIFT

(11) **EP 0 706 633 B1**
(45) Veröffentlichungstag und Bekanntmachung des Hinweises auf die Patenterteilung: **11.02.1998**
(21) Anmeldenummer: 94921629.5
(22) Anmeldetag: 28.06.1994
(51) Int. Cl.: F25B 39/02, F25B 41/06

(54) **PLATTENWÄRMEAUSTAUSCHER MIT KÄLTEMITTELVERTEILER**
PLATE HEAT EXCHANGER WITH REFRIGERATING DISTRIBUTING DEVICE
ECHANGEUR DE CHALEUR A PLAQUES AVEC DISPOSITIF PERMETTANT DE REPARTIR DES AGENTS FRIGORIGENES

(30) Priorität: 03.07.1993 DE 4322197
(43) Veröffentlichungstag der Anmeldung: 17.04.1996
(73) Patentinhaber: Ernst Flitsch GmbH & Co., D-70734 Fellbach (DE)
(72) Erfinder: Osthues, Josef, D-73614 Schorndorf (DE); Petz, Manfred, D-76228 Karlsruhe (DE); Zeitvogel, Bernd, D-76437 Rastatt (DE)
(74) Vertreter: Wolf, Eckhard, Dr.-Ing.
(86) Internationale Anmeldenummer: EP9402089
(87) Internationale Veröffentlichungsnummer: WO9502159

(56) Entgegenhaltungen:
- EP-A- 0 362 118
- US-A- 4 593 539
- US-A- 4 825 661
- US-A- 5 097 866

## Beschreibung

Die Erfindung betrifft einen als Verdampfer ausgebildeten Plattenwärmeaustauscher mit einem Verteiler für einen zweiphasigen Kältemittelmassenstrom, der einen über einen Kältemitteleinlaß mit dem vorzugsweise von einem Expansionsventil kommenden Kältemittelmassenstrom beaufschlagbaren Verteilerkanal und mehrere an im Abstand voneinander entlang dem Verteilerkanal angeordneten Abzweigstellen von diesem vorzugsweise senkrecht abgezweigte Austauscherkanäle aufweist.

Bei dem parallelen Kanalsystem eines Plattenwärmeaustauschers ist es schwierig, eine gleichmäßige Verteilung des Kältemittelmassenstroms zu erreichen. Die ungleichmäßige Verteilung ist vor allem auf ein Aufstauen der flüssigen Kältemittelanteile am Ende des Verteilerkanals zurückzuführen. Dies bedeutet, daß die am rückwärtigen Ende angeordneten Austauscherzüge mit mehr flüssigem Kältemittel beaufschlagt werden als die einlaßseitigen. Dabei kann es sogar vorkommen, daß die einlaßseitigen Züge nur mit gasförmigem Kältemittel durchströmt werden, während der Flüssiganteil die rückwärtigen Züge durchströmt. Damit einhergeht eine schlechte Regelbarkeit im Teillastbetrieb und ein Leistungsverlust bei Vollast.

Bei einer Dosiervorrichtung für Kältemittel ist es an sich bekannt (US 5 097 866), im Strömungskanal des Kältemittels einen Porenkörper anzuordnen. Der Porenkörper dient dort als Filter und Drosselelement.

Ausgehend hiervon liegt der Erfindung die Aufgabe zugrunde, eine Vorrichtung zu entwickeln, die eine weitgehend gleichmäßige Aufteilung des ankommenden zweiphasigen Kältemittelmassenstroms auf die einzelnen Austauscherkanäle gewährleistet.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, daß der Flüssiganteil des ankommenden Kältemittelmassenstroms durch den Einbau geeigneter, parallel durchströmter Poren in den Verteilerkanal an einem "Durchschießen" bis zum Verteilerkanalende gehindert und durch eine Ausgleichströmung innerhalb des Verteilerkanals gleichmäßiger auf die einzelnen Verteilerzüge aufgeteilt werden kann. Um dies zu erreichen, wird gemäß der Erfindung vorgeschlagen, daß im Verteilerkanal zwischen dem Kältemitteleinlaß und den Abzweigstellen der Austauscherkanäle ein Porenkörper mit einer Vielzahl von parallel durchströmten Poren oder Durchtrittsöffnungen angeordnet ist, daß der Porenkörper in einem sich zumindest über einen Teil der Länge des Verteilerkanals erstreckenden äußeren Drosseleinsatz angeordnet ist, und daß in der Wandung des Drosseleinsatzes zu den Austauscherkanälen führende Drosselöffnungen angeordnet sind.

Gemäß einer bevorzugten Ausgestaltung der Erfindung ist der Porenkörper als Hohlkörper mit einem einlaßseitig offenen, sich entlang dem Verteilerkanal erstreckenden Hohlraum und einer die Poren- oder Durchtrittsöffnungen enthaltenden Mantelfläche ausgebildet, wobei der Hohlkörper an seinem der Einlaßseite gegenüberliegenden, gegebenenfalls mit Durchtrittsöffnungen versehenen Boden geschlossen ist und sich teilweise oder ganz über die Länge des Verteilerkanals erstrecken kann. In Anpassung an die Abströmung zu den Austauscherkanälen weist der Hohlkörper zweckmäßig eine von der Einlaßseite zum geschlossenen Verteilerende hin konisch verjüngte Mantelfläche auf.

Die Drosselöffnungen des äußeren Drosseleinsatzes sind zweckmäßig als Radialbohrungen in dessen Wandung ausgebildet. Der vorzugsweise hohlzylindrische, bodenseitig geschlossene äußere Drosseleinsatz ist zusammen mit dem Porenkörper lösbar im Verteilerkanal angeordnet und kann daher leicht gegen einen anderen ausgetauscht oder in einen bereits vorhandenen Verdampfer nachträglich eingesetzt werden. Um eine gezielte Verteilung auf die einzelnen Austauscherkanäle zu gewährleisten, weisen die Drosselöffnungen des Drosseleinsatzes zweckmäßig einen dem Abstand der Abzweigstellen der Austauscherkanäle entsprechenden Abstand voneinander auf. Um einen Strömungsausgleich entlang dem Verteilerkanal zu ermöglichen, ist gemäß einer weiteren vorteilhaften Ausgestaltung der Erfindung zwischen dem inneren Porenkörper und dem äußeren Drosseleinsatz ein freier Strömungsraum für das Kältemittel angeordnet. Die besten Ergebnisse in dieser Hinsicht werden dadurch erzielt, daß der hohlzylindrische Drosseleinsatz längs des Verteilerkanals horizontal ausgerichtet ist und daß die Drosselöffnungen im unteren Bereich der Drosseleinsatzwandung angeordnet sind, so daß der Flüssiganteil des Kältemittels leichter in die Austauscherkanäle übertreten kann. Durch die Verwendung mindestens zweier Gruppen von in ihrer Höhenlage unterschiedlichen Drosselöffnungen im Drosseleinsatz kann sogar erreicht werden, daß beim Übertritt des Kältemittels in die Austauscherkanäle eine an dieser Stelle erwünschte Separation der flüssigen und gasförmigen Anteile des Kältemittelmassenstroms eintritt. Durch entsprechende Dimensionierung der zur ersten und zweiten Gruppe gehörenden Drosselöffnungen kann durch unterschiedliche Massenanteile von flüssigem und gasförmigem Kältemittel über unterschiedliche Verdampfungstemperaturen eine Anpassung an vorgegebene Betriebsbedingungen erreicht werden. Somit können je nach den erwünschten Betriebsbedingungen unterschiedliche Drosseleinsätze mit entsprechend angepaßten Drosselöffnungen verwendet werden.

Ein weiterer Vorteil der erfindungsgemäßen Vorrichtung besteht darin, daß bei entsprechend schwerer Bauweise des Porenkörpers und/oder des Drosseleinsatzes mit entsprechend großer Wärmekapazität die punktuelle thermische Schockbelastung der Verbindungsstellen im Bereich der einzelnen Wärmeaustauscherplatten beim Anfahrvorgang vermieden wird.

Im folgenden wird die Erfindung anhand der Zeichnung näher erläutert. Es zeigen
- Fig. 1: ein Schema eines herkömmlichen Plattenverdampfers in einem Kältemittelkreislauf ohne Drosseleinsatz;
- Fig. 2: ein Schema entsprechend Fig. 1 mit Drosseleinsatz im Verteilerkanal des Plattenverdampfers;

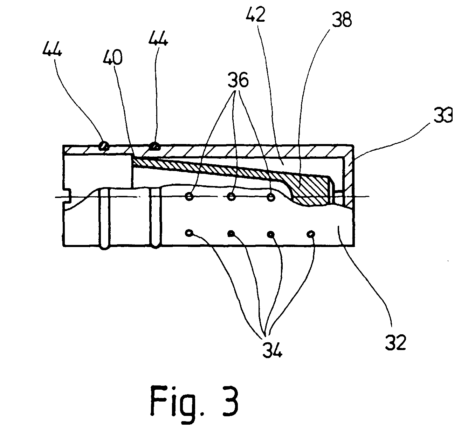

- Fig. 3: eine teilweise geschnittene Seitenansicht eines Drosseleinsatzes mit Porenkörper für einen Plattenverdampfer.

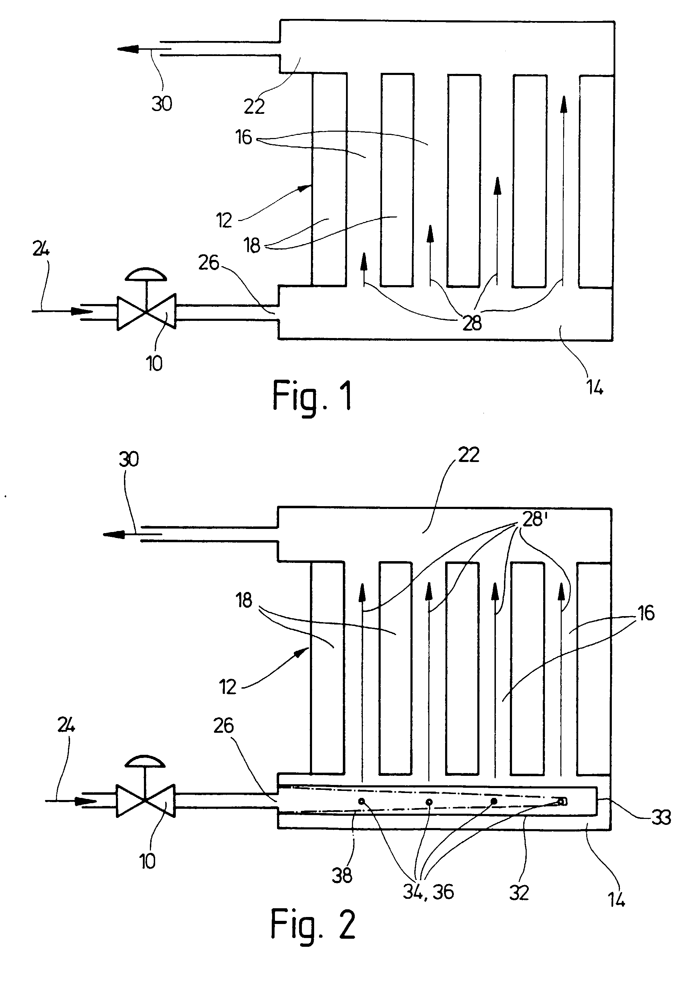

In Fig. 1 und 2 ist ein Ausschnitt eines Kältemittelkreislaufs mit einem Expansionsventil 10 und einem Verdampfer 12 schematisch dargestellt. Der Verdampfer 12 ist als Plattenwärmeaustauscher ausgebildet, der eine größere Anzahl durch Platten voneinander getrennte, im wesentlichen parallel zueinander ausgerichete, abwechselnd von Kältemittel und von einem Strömungsmittel (z.B. Sole) eines Sekundärkreises durchströmte Austauscherkanäle enthält. Die Austauscherkanäle 16,18 kommunizieren einlaßseitig mit einem Verteilerkanal 14 und auslaßseitig mit einem Sammlerkanal 22. Der Übersichtlichkeit halber sind in Fig. 1 und 2 nur die Verteiler- und Sammlerkanäle des Kältemittelkreislaufs eingezeichnet.

Im Kältemittelkreislauf einer Kälteanlage wird flüssiges Kältemittel unter hohem Druck (Pfeil 24) in dem Expansionsventil 10 unter Bildung eines zweiphasigen Kältemittelmassenstroms entspannt und über den Einlaß 26 in den Verteilerkanal 14 des Verdampfers 12 geleitet. Von dort aus wird der Kältemittelmassenstrom auf die verschiedenen Austauscherkanäle 16 verteilt, die in Richtung der Pfeile 28 durchströmt werden. Durch die Länge der Pfeile 28 wird der Kältemittelmassenstrom angedeutet. Aus Fig. 1 ist erkennbar, daß dieser bei herkömmlichen Verdampfern asymmetrisch auf die einzelnen Austauscherkanäle 16 verteilt wird. Dies ist darauf zurückzuführen, daß die flüssigen Kältemittelanteile am Ende des Verteilerkanals 14 aufgestaut werden und von dort bevorzugt in die benachbarten Austauscherkanäle 16 gelangen, während die gasförmigen Kältemittelanteile bevorzugt durch die einlaßnahen Austauscherkanäle strömen. Die flüssigen Kältemittelanteile werden an den Austauscherflächen verdampft, so daß über den Sammlerkanal 22 überhitztes Kältemittel in Richtung des Pfeils 30 in den Kreislauf zurückgeführt wird.

Bei der in Fig. 2 gezeigten erfindungsgemäßen Ausführungsform ist im Verteilerkanal 14 ein hohlzylindrischer Drosseleinsatz 32 angeordnet, der sich über die gesamte Länge des Verteilerkanals 14 erstreckt. Der vorzugsweise zylindrische Drosseleinsatz 32 ist auf der Seite des Einlasses 26 offen und an seinem Boden 33 geschlossen und weist mehrere im Abstand der Austauscherkanäle 16 voneinander in der Nähe von deren Abzweigstellen angeordnete Drosselöffnungen 34,36 auf. Im Inneren des Drosseleinsatzes 32 befindet sich zusätzlich ein einlaßseitig offener und bodenseitig geschlossener Porenkörper 38, der die Gestalt eines in Strömungsrichtung verjüngten Hohlkegels aufweist und der beispielsweise aus einem porösen Sintermetall besteht. An seinem einlaßseitigen Ende 40 liegt der Porenkörper 38 eng an der Innenfläche des Drosseleinsatzes 32 an, während er im Bereich der Drosselöffnungen 34 mit seiner Außenfläche einen im Inneren des Drosseleinsatzes 32 befindlichen Strömungsraum 42 begrenzt.

Der vom Expansionsventil 10 kommende Kältemittelmassenstrom gelangt über den Einlaß 26 zunächst in das Innere des Porenkörpers 38. Von dort aus gelangt das Kältemittel durch die Poren des Porenkörpers 38 hindurch in den Strömungsraum 42 innerhalb des Drosseleinsatzes 32. Die Poren haben dabei die Funktion von Durchtrittsöffnungen, die zu einer Abbremsung und Umlenkung des ankommenden Kältemittelstroms bei nur geringem Druckabfall und zu einer weitgehend gleichmäßigen Verteilung im Strömungsraum 42 führen. Von dort aus wird das Kältemittel über die Drosselöffnungen 34,36 auf die einzelnen Austauscherkanäle 16 gleichmäßig verteilt (vgl. die Pfeile 28' in Fig. 2). Der flüssige Kältemittelanteil tritt dabei bevorzugt über die unteren Drosselöffnungen 34 in die Austauscherkanäle 16 über, während der gasförmige Kältemittelanteil über die oberen Drosselöffnungen 36 übertritt. Man erhält dabei eine weitgehende Separation von flüssigem und gasförmigen Kältemittel, die durch die Wahl unterschiedlicher Querschnitte an den unteren und oberen Drosselöffnungen 34,36 die Einstellung unterschiedlicher Betriebsbedingungen des Kältemittelkreislaufs ermöglicht. Durch die Ringdichtungen 44 des Drosseleinsatzes 32 ist sichergestellt, daß einlaßseitig kein unerwünschter unmittelbarer Kältemittelübertritt in den Verteilerkanal 14 erfolgt.

Zusammenfassend ist folgendes festzustellen: Die Erfindung bezieht sich auf eine Vorrichtung zur Verteilung eines zweiphasigen Kältemittelmassenstroms in einem Plattenverdampfer 12. Der Verdampfer weist einen einlaßseitig mit dem von einem Expansionsventil 10 kommenden Kältemittelmassenstrom beaufschlagbaren Verteilerkanal 14 und mehrere im Abstand voneinander entlang dem Verteilerkanal 14 von diesem im wesentlichen senkrecht abgezweigte Austauscherzüge 16 auf. Um eine gleichmäßige Verteilung des Kältemittelmassenstroms 28' auf die Austauscherzüge 16 zu gewährleisten, wird gemäß der Erfindung vorgeschlagen, daß im Verteilerkanal 14 zwischen dem Kältemitteleinlaß 26 und den Abzweigstellen der Austauscherzüge 16 ein Porenkörper 38 angeordnet ist. Vorteilhafterweise ist der Porenkörper 38 in einem sich zumindest über einen Teil der Verteilerkanallänge erstreckenden äußeren Drosseleinsatz 32 angeordnet, in dessen Wandung sich zusätzliche, zu den Austauscherkanälen 16 führende Drosselöffnungen 34 befinden.

## Patentansprüche

1. Als Verdampfer ausgebildeter Plattenwärmeaustauscher mit einem Verteiler für einen zweiphasigen Kältemittelmassenstrom, der einen über einen Kältemitteleinlaß (26) mit dem vorzugsweise von einem Expansionsventil (10) kommenden Kältemittelmassenstrom beaufschlagbaren Verteilerkanal (14) und mehrere an im Abstand voneinander entlang dem Verteilerkanal (14) angeordneten Abzweigstellen von diesem vorzugsweise senkrecht abgezweigte Austauscherkanäle (16) aufweist, **dadurch gekennzeichnet**, daß im Verteilerkanal (14) zwischen dem Kältemitteleinlaß (26) und den Abzweigstellen der Austauscherkanäle (16) ein Porenkörper (38) mit einer Vielzahl von parallel durchströmten Poren oder Durchtrittsöffnungen angeordnet ist, daß der Porenkörper (38) in einem sich zumindest über einen Teil der Länge des Verteilerkanals (14) erstreckenden äußeren Drosseleinsatz (32) angeordnet ist, und daß in der Wandung des Drosseleinsatzes (32) zu den Austauscherkanälen (16) führende Drosselöffnungen (34,36) angeordnet sind.

2. Plattenwärmeaustauscher nach Anspruch 1, **dadurch gekennzeichnet,** daß der Porenkörper (38) als Siebpaket, Lochkörper oder poröser Sinterkörper ausgebildet ist.

3. Plattenwärmeaustauscher nach Anspruch 1 oder 2, **dadurch gekennzeichnet**, daß der Porenkörper (38) als Hohlkörper mit einem einlaßseitig offenen, sich entlang dem Verteilerkanal (20) erstreckenden Hohlraum und einer die Poren oder Durchtrittsöffnungen enthaltenden Mantelfläche ausgebildet ist.

4. Plattenwärmeaustauscher nach Anspruch 3, **dadurch gekennzeichnet**, daß der Hohlkörper an seinem der Einlaßseite gegenüberliegenden, gegebenenfalls Poren oder Durchtrittsöffungen aufweisenden Boden geschlossen ist.

5. Plattenwärmeaustauscher nach Anspruch 3 oder 4, **dadurch gekennzeichnet**, daß der Hohlkörper (38) sich teilweise oder ganz über die Länge des Verteilerkanals (14) erstreckt.

6. Plattenwärmeaustauscher nach einem der Ansprüche 1 bis 5, **dadurch gekennzeichnet**, daß der Porenkörper (38) lösbar im Verteilerkanal (14) angeordnet ist.

7. Plattenwärmeaustauscher nach einem der Ansprüche 3 bis 6, d**adurch gekennzeichnet**, daß der den Porenkörper (38) bildende Hohlkörper eine von der Einlaßseite (40) zum geschlossenen Verteilerende hin konisch verjüngte Mantelfläche aufweist.

8. Plattenwärmeaustauscher nach einem der Ansprüche 1 bis 7, **dadurch gekennzeichnet**, daß der vorzugsweise hohlzylindrische, bodenseitig geschlossene äußere Drosseleinsatz (32) zusammen mit dem Porenkörper (38) lösbar im Verteilerkanal (14) angeordnet ist.

9. Plattenwärmeaustauscher nach einem der Ansprüche 1 bis 8, **dadurch gekennzeichnet**, daß die Drosselöffnungen (34,36) des Drosseleinsatzes (32) einen dem Abstand der Abzweigstellen der Austauscherkanäle (16) entsprechenden Abstand voneinander aufweisen.

10. Plattenwärmeaustauscher nach einem der Ansprüche 1 bis 9, **dadurch gekennzeichnet**, daß zwischen dem inneren Porenkörper (38) und dem äußeren Drosseleinsatz (32) ein freier Strömungsraum (42) für das Kältemittel angeordnet ist.

11. Plattenwärmeaustauscher nach einem der Ansprüche 8 bis 10, **dadurch gekennzeichnet**, daß der hohlzylindrische Drosseleinsatz (32) längs des Verteilerkanals (14) horizontal ausgerichtet ist und daß zumindest ein Teil der Drosselöffnungen (34) im unteren Bereich der Drosseleinsatzwandung angeordnet ist.

12. Plattenwärmeaustauscher nach Anspruch 11, **dadurch gekennzeichnet**, daß der Drosseleinsatz (32) mindestens zwei sich in ihrer Höhenlage unterscheidende Gruppen von Drosselöffnungen (34,36) aufweist.

13. Plattenwärmeaustauscher nach einem der Ansprüche 1 bis 12, **dadurch gekennzeichnet**, daß die Drosselöffnungen (34, 36) des äußeren Drosseleinsatzes (32) als Radialbohrungen in dessen Wandung ausgebildet sind.

14. Plattenwärmeaustauscher nach einem der Ansprüche 1 bis 13, **dadurch gekennzeichnet**, daß der äußere Drosseleinsatz (32) bodenseitig geschlossen und zum Einlaß (26) hin gegenüber dem Porenkörper (38) und dem Verteilerkanal (14) vorzugsweise radial abgedichtet ist.

15. Plattenwärmeaustauscher nach einem der Ansprüche 12 bis 14, **dadurch gekennzeichnet**, daß die zur ersten und zweiten Gruppe gehörenden Drosselöffnungen (34,36) des Drosseleinsatzes (32) einen unterschiedlichen Durchlaßquerschnitt aufweisen.

## Claims

1. A plate heat exchanger designed as an evaporator and having a distributor for a two-phase refrigerant mass flow, said plate heat exchanger having a distributor duct (14), which is capable of being loaded with the refrigerant mass flow coming preferably from an expansion valve (10) via a refrigerant inlet (26), and a plurality of exchanger ducts (16) branched off preferably perpendicularly from the distributor duct (14) at branch points arranged at a distance from one another along the distributor duct, wherein a porous body (38) having a multiplicity or parallel-throughflow pores or passage orifices is arranged between the refrigerant inlet (26) and the branch points of the exchanger ducts (16), wherein the porous body (38) is arranged in an outer throttle insert (32) extending at least over part of the length of the distributor duct (14), and wherein throttle orifices (34, 36) leading to the exchanger ducts (16) are arranged in the wall of the throttle insert (32).

2. The plate heat exchanger as claimed in claim 1, wherein the porous body (38) is designed as a sieve assembly, a perforated body or a porous sintered body.

3. The plate heat exchanger as claimed in claim 1 or 2, wherein the porous body (38) is designed as a hollow body having a cavity which is open on the inlet side and extends along the distributor duct (14) and having an outer surface containing the pores or passage orifices.

4. The plate heat exchanger as claimed in claim 3, wherein the hollow body is closed on its bottom which is located opposite the inlet side and has if appropriate pores or passage orifices.

5. The plate heat exchanger as claimed in claim 3 or 4, wherein the hollow body (38) extends partially or completely over the length of the distributor duct (14).

6. The plate heat exchanger as claimed in one of claims 1 to 5, wherein the porous body (38) is arranged releasably in the distributor duct (14).

7. The plate heat exchanger as claimed in one of claims 3 to 6, wherein the hollow body forming the porous body (38) has an outer surface tapered conically from the inlet side (40) toward the closed distributor end.

8. The plate heat exchanger as claimed in one of claims 1 to 7, wherein the preferably hollow-cylindrical outer throttle insert (32) is closed at the bottom and is arranged releasably, together with the porous body (38), in the distributor duct (14).

9. The plate heat exchanger as claimed in one of claims 1 to 8, wherein the throttle orifices (34, 36) of the throttle insert (32) are at a distance from one another corresponding to the distance between the branch points of the exchanger ducts (16).

10. The plate heat exchanger as claimed in one of claims 1 to 9, wherein a free flow space (42) for the refrigerant is arranged between the inner porous body (38) and the outer throttle insert (32).

11. The plate heat exchanqer as claimed in one of claims 8 to 10, wherein the hollow-cylindrical throttle insert (32) is oriented horizontally along the distributor duct (14), and wherein at least some of the throttle orifices (34) are arranged in the lower region of the wall of the throttle insert.

12. The plate heat exchanger as claimed in claim 11, wherein the throttle insert (32) has at least two groups of throttle orifices (34, 36) differing in their position in terms of height.

13. The plate heat exchanger as claimed in one of claims 1 to 12, wherein the throttle orifices (34, 36) of the outer throttle insert (32) are designed as radial bores in its wall.

14. The plate heat exchanger as claimed in one of claims 1 to 13, wherein the outer throttle insert (32) is closed at the bottom and is sealed off toward the inlet (26) preferably radially relative to the porous body (38) and to the distributor duct (14).

15. The plate heat exchanger as claimed in one of claims 12 to 14, wherein the throttle orifices (34, 36) of the throttle insert (32) which belong to the first and second group have a different passage cross section.

## Revendications

1. Echangeur de chaleur à plaques, réalisé comme un évaporateur et comprenant un répartiteur pour un flux massique à deux phases d'agent frigorigène possédant un canal de répartition (14) auquel le flux massique d'agent frigorigène peut être envoyé à travers une admission d'agent frigorigène (26), le flux venant de préférence d'une soupape de détente (10), ainsi que plusieurs canaux d'échangeur (16) branchés sur le canal de répartition (14), de préférence à angle droit, à des points de branchement placés à distance les uns des autres le long du canal de répartition (14), **caractérisé en ce** qu'un corps poreux (38), présentant une multitude de pores ou orifices de passage, traversés parallèlement par l'agent frigorigène, est disposé dans le canal de répartition (14) entre l'admission d'agent frigorigène (26) et les points de branchement des canaux d'échangeur (16), que le corps poreux (38) est placé à l'intérieur d'un insert d'étranglement extérieur (32) qui s'étend sur une partie au moins de la longueur du canal de répartition (14) et que des orifices d'étranglement (34, 36), menant aux canaux d'échangeur (16), sont ménagés dans la paroi de l'insert d'étranglement (32).

2. Echangeur de chaleur à plaques selon la revendication 1, caractérisé en ce que le corps poreux (38) est réalisé comme un paquet de filtres, un corps perforé ou un corps fritté poreux.

3. Echangeur de chaleur à plaques selon la revendication 1 ou 2, caractérisé en ce que le corps poreux (38) est réalisé comme un corps creux possédant un espace vide ouvert du côté de l'admission et s'étendant le long du canal de répartition (20), ainsi qu'une surface latérale contenant les pores ou les orifices de passage.

4. Echangeur de chaleur à plaques selon la revendication 3, caractérisé en ce que le corps creux est fermé à son fond, situé à l'opposé du côté d'admission et présentant éventuellement des pores ou des orifices de passage.

5. Echangeur de chaleur à plaques selon la revendication 3 ou 4, caractérisé en ce que le corps creux (38) s'étend sur une partie ou la totalité de la longueur du canal de répartition (14).

6. Echangeur de chaleur à plaques selon une des revendications 1 à 5, caractérisé en ce que le corps poreux (38) est disposé amovible dans le canal de répartition (14).

7. Echangeur de chaleur à plaques selon une des revendications 3 à 6, caractérisé en ce que le corps creux formant le corps poreux (38) présente une surface latérale qui se rétrécit coniquement à partir du côté admission (40) jusqu'à l'extrémité fermée du répartiteur.

8. Echangeur de chaleur à plaques selon une des revendications 1 à 7, caractérisé en ce que l'insert d'étranglement extérieur (32), qui est de préférence de forme cylindrique creuse et fermé du côté de son fond, est disposé amovible dans le canal de répartition (14) ensemble avec le corps poreux (38).

9. Echangeur de chaleur à plaques selon une des revendications 1 à 8, caractérisé en ce que les orifices d'étranglement (34, 36) de l'insert d'étranglement (32) présentent une distance les uns des autres qui correspond à l'espacement des points de branchement des canaux d'échangeur (16).

10. Echangeur de chaleur à plaques selon une des revendications 1 à 9, caractérisé en ce qu'un espace d'écoulement libre (42) pour l'agent frigorigène est ménagé entre le corps poreux (38) intérieur et l'insert d'étranglement extérieur (32).

11. Echangeur de chaleur à plaques selon une des revendications 8 à 10, caractérisé en ce que l'insert d'étranglement (32), de forme cylindrique creuse, est orienté horizontalement le long du canal de répartition (14), et qu'une partie au moins des orifices d'étranglement (34) est ménagée dans la zone inférieure de la paroi de l'insert d'étranglement.

12. Echangeur de chaleur à plaques selon la revendication 11, caractérisé en ce que l'insert d'étranglement (32) présente au moins deux groupes d'orifices d'étranglement (34, 36), groupes qui se distinguent par leur position en hauteur.

13. Echangeur de chaleur à plaques selon une des revendications 1 à 12, caractérisé en ce que les orifices d'étranglement (34, 36) de l'insert d'étranglement extérieur (32) sont réalisés sous la forme de perçages radiaux dans la paroi de cet insert.

14. Echangeur de chaleur à plaques selon une des revendications 1 à 13, caractérisé en ce que l'insert d'étranglement extérieur (32) est fermé du côté de son fond et est étanché, de préférence radialement, en direction de l'admission (26), vis-à-vis du corps poreux (38) et du canal de répartition (14).

15. Echangeur de chaleur à plaques selon une des revendications 12 à 14, caractérisé en ce que les orifices d'étranglement (34, 36) appartenant respectivement au premier et au second groupe d'orifices de l'insert d'étranglement (32) possèdent des sections de passage différentes.
